# EUROPEAN PATENT APPLICATION

(11) **EP 1 852 812 A1**
(43) Date of publication of application: **07.11.2007**
(21) Application number: 07251858.2
(22) Date of filing: 03.05.2007
(51) Int. Cl.: G06N 5/02

(54) **System and method for enhancing source content**

(30) Priority: 03.05.2006 US 796887
(71) Applicant: Unbounded Access Ltd., 91487 Jerusalem (IL)
(72) Inventor: Seeman, Lisa UB Access, Beit Shemesh 99052 (IL)
(74) Representative: White, Duncan Rohan

(57) **Abstract**

A source content enhancement system is described. The source content enhancement system includes a knowledge engine and a knowledge store operatively connected to the knowledge interface engine. The knowledge engine includes a unit for formulating at least one query relating to at least one term, the unit being selected from the group consisting of a knowledge extension engine, a validation engine, and a third party specific interface and a knowledge interface engine for receiving at least one query from the unit, The knowledge store contains information associated with the at least one term in the query. The knowledge interface engine is capable of obtaining information from the knowledge store and of providing a response to the at least one query to the unit. A related apparatus and methods are also described.

## Description

### FIELD OF THE INVENTION

The present invention relates to enhancing source content.

### BACKGROUND OF THE INVENTION

Source content may be used in different contexts by people, devices, and applications with different abilities and accessibility issues. Much research is being done in increasing accessibility to source content on many different fronts.

The World Wide Web Consortium (W3C) has created many standards and guidelines to make source content more accessible to users with disabilities. These standards and guidelines may also be used for devices with rendering limitations (e.g. size). Web applications often rely on a hybrid of technologies such as scalable vector graphics (SVG), asynchronous JavaScript and XML (AJAX), and JavaScript that do not promote and/or support rich interaction semantics. Adaptive technologies, that need to provide alternative access to complex user interfaces, are often left guessing at the semantics behind specific portions of a document making them inaccessible.

To fix the problem a role taxonomy has been developed to provide extra semantics to support platform accessibility interfaces and adaptive technologies. Roles are therefore useful for building applications and increasing interoperability. Roles may be implemented using RDF (Resource Description Framework) specification from the W3C. However difficulties persist. Full role sets for different types of roles (such as more widgets, states or types of content) have not been included in the specification. Although an author may try to extend the role sets, if semantics are used in a way not anticipated by the specification, the assistive technologies will not know how to handle these user defined roles.

Further, web authors are likely to use roles incorrectly or only partially correctly. This is because RDF is complex to write and is complex to understand. For example, many properties can be found only after following multiple links and references. Furthermore, the right way to use roles (such as which roles to use when and where, how to build relationships, and how to state properties) is not clear or obvious. Further, applications dependent on roles, will find that RDF is non trivial to parse. As a result assistive technologies in the current art, just remember the use of standard roles (as strings) with the result that user defined roles cannot work.

### SUMMARY OF THE INVENTION

The present invention, in preferred embodiments thereof, seeks to provide a system and method for enhancing source content. A knowledge interface engine may respond to queries about terms that may be stored in a knowledge store. The knowledge interface engine may gather any information about the terms from the knowledge store and respond to queries from a knowledge extension engine, a validation engine, and/or a third party software interface. A knowledge extension engine may query the knowledge interface engine to gather knowledge that may be useful in creating extended term(s). Extended term(s) may optionally be created when source content comprises elements that may be better implemented using extended term(s). A validation engine may be used to validate that term(s) are used correctly. The term(s) to be validated may be comprised in a source content or individually entered. A third party specific interface may be used to provide support for term(s) encountered by third party software. The term(s) requiring support may be unknown to the third party software or require additional information to be properly used. Use of the knowledge interface engine may facilitate the supply of enriched content to users. A non-limiting exemplary use of the invention is to aid assistive technology applications in using all the information available implicitly and/or explicitly to adapt as much of the original source content as possible to increase the quantity of enriched content produced.

There is thus provided in accordance with a preferred embodiment of the present invention, a source content enhancement system. The source content enhancement system includes a knowledge engine and a knowledge store operatively connected to the knowledge interface engine. The knowledge engine includes a unit for formulating at least one query relating to at least one term, the unit being selected from the group consisting of a knowledge extension engine, a validation engine, and a third party specific interface and a knowledge interface engine for receiving at least one query from the unit, The knowledge store contains information associated with the at least one term in the query. The knowledge interface engine is capable of obtaining information from the knowledge store and of providing a response to the at least one query to the unit.

Further, in accordance with a preferred embodiment of the present invention, the knowledge engine receives a source content and generates enriched content.

Moreover, in accordance with a preferred embodiment of the present invention, the knowledge extension engine produces enhanced terms to place in a data store.

Additionally, in accordance with a preferred embodiment of the present invention, the validation engine compares the use of the at least one term to the definition of the at least one term in the knowledge store to validate the use of the at least one term.

Still further, in accordance with a preferred embodiment of the present invention, the third party specific interface provides information about the at least one term to third party applications.

There is thus provided in accordance with a preferred embodiment of the present invention, a source content enhancement method. The source content enhancement method includes having a knowledge engine including a knowledge interface engine, and a unit, the unit being selected from the group consisting of a knowledge extension engine, a validation engine, and a third party specific interface, formulating at least one query relating to at least one term by the unit, receiving by a knowledge interface engine at least one query from the unit, obtaining by the knowledge interface engine information from a knowledge store, the knowledge store containing information associated with the least one term in the at least one query, and providing a response to the at least one query to the unit.

Further, in accordance with a preferred embodiment of the present invention, the source content enhancement method further includes receiving by a knowledge engine a source content, and generating by the knowledge engine enriched content.

Moreover, in accordance with a preferred embodiment of the present invention, the source content enhancement method further includes producing enhanced terms by the knowledge extension engine to place in a data store.

Additionally, in accordance with a preferred embodiment of the present invention, the source content enhancement method further includes validating the use of the at least one term by the validation engine by comparing the use of the at least one term to the definition of the at least one term in the knowledge store.

Still further, in accordance with a preferred embodiment of the present invention, the source content enhancement method further includes providing information about at least one term to third party applications by the third party specific interface.

### BRIEF DESCRIPTION OF THE DRAWINGS

The present invention will be understood and appreciated more fully from the following detailed description, taken in conjunction with the drawings in which:
Fig. 1 is a block diagram illustration of a system for enhancing source content, operative in accordance with a preferred embodiment of the present invention;
Fig. 2 is a more detailed block diagram illustration of the knowledge store and the knowledge engine of Fig. 1, operative in accordance with a preferred embodiment of the present invention; and
Fig. 3 is an illustration of an exemplary dialog box which may be used to define an extended role, operative in accordance with a preferred embodiment of the present invention.

It is noted that for simplicity and clarity of illustration, elements shown in the figures have not necessarily been drawn to scale. Further, where considered appropriate, reference numerals may be repeated among the figures to indicate corresponding or analogous elements.

### DETAILED DESCRIPTION OF A PREFERRED EMBODIMENT

The present invention, in preferred embodiments thereof, seeks to provide a system and method for enhancing source content. A knowledge interface engine may respond to queries about terms that may be stored in a knowledge store. The knowledge interface engine may gather any information about the terms from the knowledge store and respond to queries from a knowledge extension engine, a validation engine, and/or a third party software interface. A knowledge extension engine may query the knowledge interface engine to gather knowledge that may be useful in creating extended term(s). Extended term(s) may optionally be created when source content comprises elements that may be better implemented using extended term(s). A validation engine may be used to validate that term(s) are used correctly. The term(s) to be validated may be comprised in a source content or individually entered. A third party specific interface may be used to provide support for term(s) encountered by third party software. The term(s) requiring support may be unknown to the third party software or require additional information to be properly used. Use of the knowledge interface engine may facilitate the supply of enriched content to users. A non-limiting exemplary use of the invention is to aid assistive technology applications in using all the information available implicitly and/or explicitly to adapt as much of the original source content as possible to increase the quantity of enriched content produced.

A system and method for enhancing source content has been described in U.S. Patent Application Ser. No. 10/957,797, filed October 4, 2004, entitled "System and Method for Enhancing Resource Accessibility".

### Mapping of concepts and terms

Knowledge store hereinbelow may comprise any of the resource specific knowledge base(s), resource knowledge base(s), scenario-specific style sheet rules, user preferences, mapping knowledge base, taxonomy, metagraphs, etc. described. Knowledge store hereinbelow may comprise any of content mapping rules, knowledge data, ontologies, concepts, associated concepts, associated content, implied content, assumptions, roles, relationships, associations, abstract concepts, implicit meanings, implied meanings, simplifications, dependent meanings, disambiguating information, context references, sections of meaning ambiguities, metaphors, similes, knowledge model(s), relationships to core concepts in human knowledge that enable content in different domains to be manipulated and adapted, limitations, intents, types of content, interpretations, clarifications, rules, links, statements, overrides, cascaded rules, definitions, equivalents, implied and secondary meanings, implied information, standardized abbreviations, replacements, identity information, functionality, hierarchical information, structural information, relative importance of elements, language usage associations, rules, descriptions, expected behaviours, expected usages and audiences, relationships to other resources or elements, knowledge, conditions, alternatives, grammatical information, lexical knowledge, syntactical supplementary information, linguistic information, media equivalencies, knowledge of language use, knowledge concerning form, knowledge concerning content, knowledge concerning presentation, knowledge concerning syntactical information, language usage and uncertainties that arise from language usage, ambiguity, phraseology, supplementary information concerning form, supplementary information concerning content, supplementary information concerning presentation, supplementary information concerning syntactical information, information concerning hierarchical prominence of an element, functional alternatives to an element, relative importance of an element, relative importance based on or mapped to a user profile, knowledge mapped to or relative to a user profile, knowledge mapped to or relative to a system profile, knowledge mapped to a scenario profile, equivalent and alternate events and behaviors, a default, defaults selected from the list of common standard interpretations, lexicons, overrides and other exceptions that map text to meanings in accordance with considerations such as defined location, conditions and user profiles, meanings for ambiguous textual elements, functional meanings of an element's label, end scenario information, priority information, override information, structural information, presentational information, mapping information, relationship information, importance information, certainty information, context information, scope information, usage information, third party information, formatting information, information on context of a section of content, a user preferences file, a scenario specific transformation, an inheritance relationship, graphs of the above, relationships between different terms, and maps of relationships between related pieces of knowledge.
In the description hereinbelow the expression "knowledge" comprises any of the contents of a knowledge store.
Knowledge capture and processing engine hereinbelow may comprise any of a resource accessibility engine annotation wizard(s), an editor interface, a lexical analyzer, an interactivity analyzer, a complexity analyzer, an extractor, transformation program(s), a knowledge gap situations compiler, a content parser, a content analyzer, RDF analysis engine, inference engine, and rendering engine described.
Enriched content hereinbelow may comprise mapped resource(s) and converted resource(s).
Source content hereinbelow may comprise resource(s) and their content.

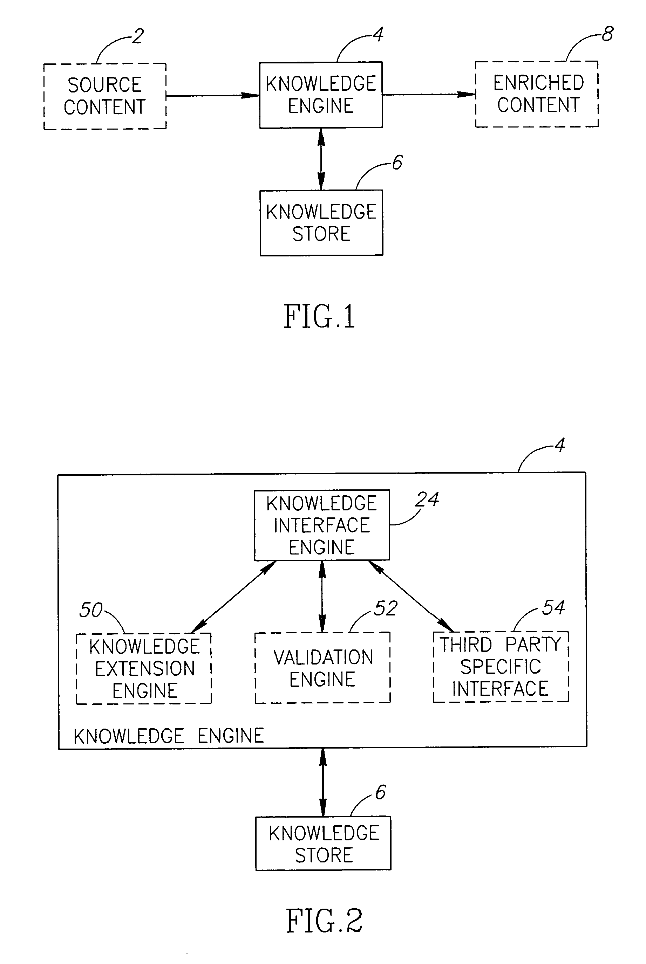

Reference is now made to Fig. 1, which is a block diagram illustration of a system for enhancing source content, operative in accordance with a preferred embodiment of the present invention. The source content enhancement system may comprise a knowledge capture and/or processing engine (hereinbelow knowledge engine) 4 and a knowledge store 6, and may optionally output enriched content 8 from optionally received source content 2. Enriched content 8 may comprise content, changed content, and/or information about content. Knowledge engine 4 may comprise at least one engine for knowledge capture and/or processing. Knowledge store 6 may comprise at least one database comprising knowledge. Knowledge store 6 may be comprised in source content 2, part of content, comprised in a database and/or distributed across multiple locations.

Source content 2 may comprise, for example, websites, web content, multimedia files, word processing files using different formats, databases of different formats, resource files, data objects, text, programmable objects, complicated documents and books intended for electronic viewing. Source content may be comprised of at least one element (also referred to as a widget) and/or a portion of source content.

Enhancement of source content may optionally comprise providing enriched content 8, an enriched version of the source content. When presented to a user enriched content 8 conveys essentially the same function or purpose as the original source content in a manner appropriate to the user, device, and/or application to/on which the content is intended to be rendered and/or run. In a non-limiting example of taking into account user disabilities, auditory or visual content may need to be presented in a manner accessible to a deaf or blind user.

In some preferred embodiments of the present invention at least one knowledge capture program comprised in knowledge engine 4 may be used to examine source content 2 to find information embedded therein and at least one knowledge processing program comprised in knowledge engine 4 may be used in conjunction with at least one knowledge store 6 to "capture" and "learn" information about the knowledge store and/or source content which may be saved in at least one knowledge database in knowledge store 6. Knowledge engine 4 may use knowledge of the meaning of the content of source content 2 to obtain previously unavailable knowledge. For example, if a bulleted list of items has red bullets indicating sale items, this knowledge may be shown on a black and white display with the words "sale item" instead of indicating the fact that the bullet is red. The fact that the item is on sale may be much more important to the user than the color of the bullet.

Furthermore, in a preferred embodiment of the present invention new information such as (but not limited to) new user scenarios or new taxonomies may be added to the at least one knowledge store 6 without requiring revision of source content 2 or knowledge engine 4. A result of learning may be more knowledge, for example, a new user rule, a new case of an old rule, and/or auxiliary knowledge, that may adjust the scope or certainty levels associated with a piece of knowledge inside a given context, etc. For example, there may be a term to describe widgets such as "supported-attributes", which may list attribute(s) that are supported by an element. The term supported-attributes may be extended, for example to "must-have-attributes", which implies that not only can an element have the attribute(s) but it is an error if the attribute(s) are not there. In a further example, an image widget that supports descriptions may be extended such that the term used for the property value "description" includes "labels" as a type of short description.

Knowledge capture and processing may be an iterative process in which new knowledge may be added to knowledge store 6 as it is learned. Such learning may occur during a knowledge capture cycle and/or a knowledge processing cycle when new knowledge is inferred from old knowledge. Knowledge gained may, in non-limiting examples, result in the extension of taxonomies and/or lexicons and/or the creation of new rules, new instances of a rule, and/or a new case where it is applicable and the gained knowledge may be used by knowledge engine 4. Knowledge gained may result, in non-limiting examples, to adjustments to existing cases, rules, and/or knowledge, for example, it may cause a change in scope, context, and/or priority of the existing rules and/or existing knowledge.

In a non-limiting example, use of at least one database in knowledge store 6 which may relate to the content and formatting of source content 2 and may further include knowledge necessary for proper presentation of the contents of source content 2 to the user in accordance with the user's perceptual preferences and/or end device presentation capabilities may enable the creation of enriched content 8 in which, understanding of the meaning of the contents of source content 2, the relative importance of elements in the source content, and similar concepts are incorporated. Non-limiting examples of this type of enriched content may comprise text replaced with symbols and simple words, less important parts of the content removed or hidden, ambiguous wording such as predicates and confusing word ambiguities replaced with clear expressions, and extra help or text provided when it aids comprehension. For example, if a new method of displaying complex content to blind persons becomes available, the new method may be applied to existing source content by incorporating the new methods into the appropriate knowledge store 6.

Content specific knowledge may be comprised within source content 2 and an association may be made between element(s) of content and concepts or data. For example, role(s) may be related to the meaning and/or the behaviour of an element. Thus data such as roles may comprise a description of inferred knowledge, which may enable explicit expression of human understandable inferences.

Reference is now made to Fig. 2 a more detailed block diagram illustration of knowledge store 6 and knowledge engine 4 of Fig. 1, operative in accordance with a preferred embodiment of the present invention. Knowledge store 6 may comprise a knowledge interface engine 24, an optional knowledge extension engine 50, an optional validation engine 52, and an optional third party specific interface 54 all operatively connected. Knowledge engine 4 may be operatively connected to knowledge store 6, may use any database therein. Knowledge store 6 may comprise terms of knowledge as defined hereinabove; for example, pieces of knowledge, content parsing rules, taxonomies, roles, properties, content mappings, relationships, concepts, rules, logic, expressons for describing relationships, auxiliary knowledge, overrides, information about certainties, information about format, relationships between lexicons items, and relationships to context any of which may be expressed in a hierarchy, and relationships between any of the above list, etc. Content mappings may comprise mappings (of content and/or elements) to any of the above list, to relationships between sections of content, and/or to platform API objects. Taxonomies may comprise knowledge associated with element(s) of content. In a preferred embodiment of the present invention, knowledge interface engine 24 may be used in conjunction with a data encoding, for example, the RDF format to ensure the correct use of terms without requiring familiarity or full understanding of the terms. The data encoding may be used in describing elements or content comprised in source content and the interrelations between them.

Knowledge extension engine 50, validation engine 52 and/or third party specific interface 54 may require support for terms and may communicate with knowledge interface engine 24. Use of knowledge interface engine 24 possibly with other components of knowledge engine 4 and/or knowledge store 6 may enable 1) extending terms, 2) validating and aiding in the proper use of terms, and 3) improved application support.

Knowledge interface engine 24 may comprise function calls and/or code to collect information and/or parse the data encodings (for example, RDF) for related values in knowledge store 6 and may follow a path of references and namespaces to gather all the information which may be required and/or found. Gathering of information may comprise the creation of queries that may allow information to be inferred or inherited. Function calls to knowledge interface engine 24 may include queries/requests about term(s) such as: list all supported properties including those inherited, list all required properties including those inherited, recommend additional properties, whether for a given term a given property is supported, whether for a given term a given property is required, for a given term is a given property advised, what is the "name ref" (in the DOM) of this term, what is the closest parent class of the term, suggest operating system accessibility object mapping, suggest a browser, base, or other element, and supply any other required information. An exemplary pseudo code implementation of knowledge interface engine 24 may comprise:

```
 List getAllRequiredProperties(term)
 {
  getAllAncestors(term)
  for each ancestor
  {
    getRequiredProperties(term)
    addPropertiesToList();
  }
 }
 
 List getAllSupportedProperties(term)
 {
  getAllAncestors(term)
  for each ancestor
  {
    getSupportedProperties(term)
     addPropertiesToList();
   }
 }
 
 boolean isSupportedProperty(term, prop)
 {
  List = getAllSupportedProperties(term)
  isPropertyInList(prop, List);
 }
 
 object suggestedOsObject(term)
 {
  MyProperties = getTermProperties(term);
  List = getAllTerms();
  for each term
   {
     TermProperties = getTermProperties(termInList);
     index = matchIndex(MyProperties, TermProperties)
     findMax(index);
  }
 }
 
 object closestParent(term)
 {
  MyProperties = getTermProperties(term);
  List = getAllTerms();
  for each term
   {
    TermProperties = getTermProperties(termInList);
     index = matchIndex(MyProperties, TermProperties)
    findMax(index);
  }
 }
```

An exemplary pseudo code implementation for knowledge extension engine 50 may comprise:

```
 {
  allProperties = getAllProperties()
  chosenProperties = chooseProperties(allProperties)
  getClosestParent(chosenProperties);
  buildRDF()
 }
```

An exemplary pseudo code implementation for validation engine 52 may comprise:

```
 For each term in doc
 {
  isTermValid(term)
 }
 boolean is TermValid(term)
 {
  RequiredProperties = getAllRequiredProperties(term)
  for each required property
  {
    IsProprtyDefined(term)
  }
  SupportedProperties = getAllSupportedProperties(term)
  for each defined Property in term
  {
    isPropertySupported(SupportedProperties)
  }
 }
```

Knowledge extension engine 50 may examine how an element is used and may create appropriate extended term(s) which may allow greater knowledge about the element. Knowledge extension engine 50 may request knowledge regarding existing terms from knowledge interface engine 24 that may be used to aid in the creation of a new and/or extended term and/or element optionally to be used in a source content and/or enriched content. For example, a new instance of a widget may be created which must comprise a given role or support a given state, as a checkbox must be checkable.

Knowledge extension engine 50 may list properties, roles, etc. that may need to be supported and may request knowledge interface engine 24 to recommend an appropriate term to use as a base term. Knowledge store 6 may be parsed to understand how different terms may be used to find an appropriate base term. Knowledge extension engine 50 may then guide an author through the process of deciding the properties and relationships of the new term. For example, in determining base term(s) for an extended term, concepts such as what states will be supported, the context, and the anticipated behaviours may be considered. For example, an author may be extending terms that act as properties to enable better description of their new terms. Knowledge extension engine 50 may identify related concepts and relationships for the user to see what term is closest to what they want. For example, if an existing term supports the behaviour the extended term supports, but the extended term restricts it, this may be a classic case of valid inheritance. Knowledge extension engine 50 may verify that this role does not yet exist with the same functionality by a different name.

Knowledge extension engine 50 may query what properties need to be added to the extended term to support all the functionality it requires. Knowledge interface engine 24 may advise the author to use a different term as a base for the derived term. For example, an author may have a checkbox widget but may need to support the state "mixed". Knowledge interface engine 24 may recommend use of a tristate checkbox instead.

In a further preferred embodiment of the present invention, knowledge extension engine 50 may receive a source content. It may find elements(s) which require an extended term. Knowledge interface engine 24 may be used as above. A new extended term may be created and stored in knowledge store 6.

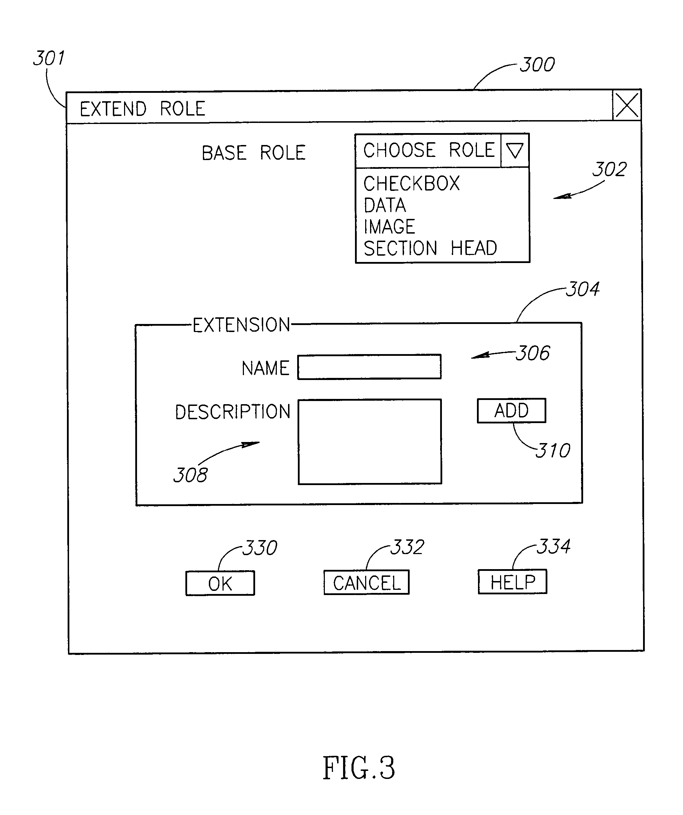

Figure 3, to which reference is now briefly made, is an illustration of an exemplary dialog box which may be used to define an extended role, operative in accordance with a preferred embodiment of the present invention. A dialogue box 300 comprises a title bar 301, a drop-down list 302, a container 304, and buttons 330, 332, and 334. Title bar 301 comprises a title "Extend Role" and a close box. Drop-down list 302 comprises a title "base role" and a default value "choose role" and values "checkbox", "date", "image", and "section head". Container 304 comprising a label "extension" further comprises a text box 306 with the label "name", a text box 308 with the label "description" and a button 310 labelled "add". Button 330 is labelled "OK", button 332 is labelled "cancel" and button 334 is labelled "help". Buttons 320, 330, 332, and 334 may comprise the functionality described by their labels.

In this example dialogue box, a base role may be picked from pull-down 302 upon which the extended role will be based. A name for the extended term may be assigned in text box 306 and description in text box 308. Other properties such as relationships to other terms may be input using the "add" button 310. For example, to define an extended role named "company logo", the base term selected may be "image" and the description may comprise the name of the company whose logo is shown in the image. Further properties such as "this role is used for presentation only" may be added via the add button.

Referring back now to Fig. 2, knowledge engine 4 may "understand" relationships between content and term(s) comprised in knowledge store 6; in a non-limiting example, it may parse content and search the RDF data encodings for related values. Validation engine 52 may check whether term(s) are being used correctly by requesting that knowledge interface engine 24 provide information such as properties etc. related to the term. Validation engine 52 may request validation of components (such as elements or terms) in a source content or of individual elements and/or terms. Validation engine 52 may, for example, generate inferences which may allow the creation of rules for the validation of the use of terms. For example, a rule may be created for checkboxes that they must be checkable. When a check box is found in a source content, the checkbox rule may be checked.

Validation engine 52 may supply a list of supported properties for a given term instance and knowledge interface engine 24 may check that there are no other properties which must be supported and/or that there are no properties included that the given term type does not support. Validation engine 52 may check for the correct placements of attributes of an element in source content, by asking knowledge interface engine 24 whether the attributes as used match the element, and work well with its concept. Validation engine 52 may suggest use of a different term instead of the term used based for example, on the context of an element and the states and properties the element is using.

Knowledge validation engine 24 may recommend adapting rules. For example, an author says that a given checkbox need not support "checked". The rule may then be adapted for the given checkbox. For example, the checkbox may not support "checked" when it is disabled.

Knowledge validation engine 24 may recommend relationships that knowledge engine 4 may have determined should be supported. For example knowledge interface engine 24 may recommend an author include relationships recommended by WCAG 1.0 or 2.0 such as labels, group information such as where a tree item belongs, or relationships that do not make sense in a given context.

Validation engine 52 may check for the correct handling of an element in relationship to its base concepts and attributes by, for example, a programming function or affect. For example, knowledge engine 4 may parse or execute code such as JavaScript to confirm that its usage looks correct by querying interface engine 24 with questions about the element. Given the way the element's properties are handled once they are associated with a role or term and validation engine 52 may confirm its usage inside the script. For example, user events should change accessible states for elements of an accessible role. If events do not change the accessibility states then it is likely that accessible states will not be properly updated by the document object module (DOM). Sometimes an event may be activated in order to confirm the action and/or to trigger content rules.

Validation engine 52 may suggest repairs for any invalid usage found. Validation engine 52 may further generate feedback to an author of a source content. For example, after running a validation, validation engine 52 may generate a report, for example, "You have used the role checkbox for an element that supports check=mixed. A checkbox does not support this state value. Suggested remedy: change the role to a "tri-state-checkbox". The user may make the change or request that it be done automatically.

Third party specific interface 54 may enable a third party application to use knowledge interface engine 24. The third party application may be using a source content that may comprise a new term or a new use of an old term. The third party application may request recommendations for proper term usage, such as mapping to an operating system accessible object, mapping to alternate interfaces for the user, and/or validation options for the user, etc. Third party specific interface 54 may provide, for example, a list of characteristics of the term so that the third part application may "understand" what the string "means" and how to handle it. Third party specific interface 54 may suggest mappings to objects from alternative systems and/or protocols, possibly not originally supported. For example, mappings may be suggested to objects and/or properties of a different operating system, a different technology and encoding, different knowledge processing applications, or for adapting the interface (of the third party application) or content to match different device and/or user preferences and/or needs. Hence, knowledge interface engine 24 may allow third party applications such as browsers and Assistive Technology to use terms they do not recognize.

Numerous specific details have been described in the preceding description to provide a thorough understanding of the invention. However, it will be understood by those of ordinary skill in the art that the present invention may not require all these specific details. In other instances, well-known methods, and/or components may not have been described in full detail so as not to obscure the present invention.

An embodiment of the present invention may include an apparatus for performing the operations described herein. Such an apparatus may be specially constructed or may comprise a general-purpose computer that is operated according to a computer program stored therein. Such a computer program may be stored in any appropriate computer readable storage medium.

It is appreciated that software components of the present invention may, if desired, be implemented in ROM (read only memory) form. The software components may generally be implemented in hardware, if desired, using conventional techniques.

It is appreciated that various features of the invention, which are, for clarity, described in the contexts of separate embodiments, may also be provided in combination in a single embodiment. Conversely, various features of the invention; which are, for brevity, described in the context of a single embodiment, may also be provided separately or in any suitable subcombination.

While certain features of the invention have been illustrated and described herein, many modifications, substitutions, changes, and equivalents will now occur to those of ordinary skill in the art. It should therefore be understood that the present invention is not limited by what has been particularly shown and described hereinabove. Rather the scope of the invention is defined only by the claims that follow:

## Claims

1. A source content enhancement system comprising:
a knowledge engine comprising:
a unit for formulating at least one query relating to at least one term, the unit being selected from the group consisting of a knowledge extension engine, a validation engine, and a third party specific interface; and
a knowledge interface engine for receiving at least one query from said unit; and
a knowledge store operatively connected to said knowledge interface engine, the knowledge store containing information associated with the at least one term in the query,
wherein said knowledge interface engine is capable of obtaining information from said knowledge store and of providing a response to said at least one query to said unit.

2. The source content enhancement system according to claim 1 and wherein said knowledge engine receives a source content and generates enriched content.

3. The source content enhancement system according to claim 1 and wherein said knowledge extension engine produces enhanced terms to place in a data store.

4. The source content enhancement system according to claim 1 and wherein said validation engine compares use of the at least one term to the definition of the at least one term in said knowledge store to validate use of the at least one term.

5. The source content enhancement system according to claim 1 and wherein said third party specific interface provides information about the at least one term to third party applications.

6. A source content enhancement method comprising:
having a knowledge engine comprising a knowledge interface engine, and a unit, the unit being selected from the group consisting of a knowledge extension engine, a validation engine, and a third party specific interface;
formulating at least one query relating to at least one term by the unit;
receiving by a knowledge interface engine at least one query from the unit;
obtaining by the knowledge interface engine information from a knowledge store, the knowledge store containing information associated with the least one term in the at least one query; and
providing a response to the at least one query to the unit.

7. The source content enhancement method according to claim 6 and further comprising:
receiving by a knowledge engine a source content; and
generating by the knowledge engine enriched content.

8. The source content enhancement method according to claim 6 and further comprising producing enhanced terms by the knowledge extension engine to place in a data store.

9. The source content enhancement method according to claim 6 and further comprising validating the use of the at least one term by the validation engine by comparing the use of the at least one term to the definition of the at least one term in the knowledge store.

10. The source content enhancement method according to claim 6 and further comprising providing information about at least one term to third party applications by the third party specific interface.
